# EUROPEAN PATENT SPECIFICATION

(11) **EP 1 223 574 B1**
(45) Date of publication and mention of the grant of the patent: **26.11.2008**
(21) Application number: 01100022.1
(22) Date of filing: 04.01.2001
(51) Int. Cl.: G11B 5/86

(54) **Master carrier for magnetic transfer**
Urträger für magnetische Übertragung
Support maître pour transfert magnétique

(43) Date of publication of application: 17.07.2002
(73) Proprietor: FUJIFILM Corporation, Minato-ku Tokyo (JP)
(72) Inventor: Nagao, Makoto, Odawara-shi, Kanagawa 250-0001 (JP); Sugita, Ryuji, Ibaraki 316-0036 (JP); Nishikawa, Masakazu, Odawara-shi, Kanagawa 250-0001 (JP)
(74) Representative: HOFFMANN EITLE

(56) References cited:
- GB-A- 742 666
- US-A- 2 894 798
- US-A- 3 752 926
- US-A- 3 869 711
- PATENT ABSTRACTS OF JAPAN vol. 1998, no. 06, 30 April 1998 (1998-04-30) -& JP 10 040544 A (MATSUSHITA ELECTRIC IND CO LTD), 13 February 1998 (1998-02-13)
- PATENT ABSTRACTS OF JAPAN vol. 009, no. 170 (P-373), 16 July 1985 (1985-07-16) -& JP 60 047233 A (HITACHI SEISAKUSHO KK), 14 March 1985 (1985-03-14)

## Description

### BACKGROUND OF THE INVENTION

The present invention relates to a master carrier for magnetic transfer to be used for transfer of a recording information to a magnetic recording medium in a magnetic recording/reproducing apparatus of large capacity and high recording density. In particular, the invention relates to a master carrier for magnetic transfer to be used in the recording of servo signal, address signal, other ordinary image signal, audio signal, data signal, etc. to a magnetic recording medium of large capacity and high recording density.

With rapid development and progress in the utilization of digital image, amount of information to be handled in personal computers and other devices has extensively increased. Because of the increase of the amount of information, there are now strong demands on a magnetic recording medium, which has larger capacity to record the information and can be manufactured at low cost and requires shorter time for writing and reading operations.

In a high density recording medium such as hard disk or in a high density floppy disk type magnetic recording medium represented by ZIP (Iomega Inc.), information recording area has narrower track compared with the floppy disk now commonly used. In order that magnetic head can scan over narrow track width and signals can be recorded or reproduced with high S/N ratio, it is necessary to perform accurate scanning by the tracking servo technique.

In a large capacity magnetic recording medium such as a hard disk or a removable type magnetic recording medium, servo signal for tracking or address information signal, reproduction clock signal, etc. are recorded with a certain spacing between them within one turn of the disk. By reproducing these signals with a given spacing, the magnetic head accurately scans over a track while checking and correcting the position of the head. It is generally practiced that these signals are recorded on the magnetic recording medium in advance in a process called "preformat" at the time when the magnetic recording medium is manufactured.

Accurate positioning is required for the recording of signals such as servo signal for tracking, address information signal, reproduction clock signal, etc. In this respect, after the magnetic recording medium is incorporated in a drive, preformat recording is performed by a magnetic head under strict position control using a special-purpose servo recording system.

However, in the preformat recording of signal such as servo signal, address information signal, or reproduction clock signal by the magnetic head, much time is required for the preformat recording in order to perform the recording with the magnetic head under strict position control using a special-purpose servo recording system. Also, with the increasing requirements on higher magnetic recording density, the amount of signals to be recorded by the preformat recording is increased, and this means that still more time is required.

Further, because of the spreading of the recording magnetic field due to spacing loss between the head and the magnetic recording medium and due to the shape of the recording head, it is disadvantageous in that magnetizing transition at the end of the track recorded by the preformat recording lacks sharpness.

Further, when information is transferred from the master carrier for magnetic transfer, the master carrier must have coercive force 3 times or more higher than coercive force (Hc) of the recording medium where the information is to be transferred.

When a planar magnetic material is partially magnetized, coercive force of the master carrier for magnetic transfer is 477.5 kA/m (6000 Oe) or more because coercive force of the magnetic material used in the recording medium for high density recording is about 159.1 kA/m (2000 Oe). For this reason, it is practically impossible to precisely magnetize with the magnetic head.

To solve the problems in the prior art, JP-A-10-40544 proposes a recording method. According to this method, surface irregularities (convex and concave portions) corresponding to information signal are formed on the surface of a base material, and ferromagnetic thin film is formed at least on the surface of the convex portion. The surface of a master carrier for magnetic transfer thus prepared is brought into contact with the surface of a sheet-like or a disk-like magnetic recording medium where ferromagnetic thin film or ferromagnetic powder coating layer is formed. Or, AC bias magnetic field or DC magnetic field is applied, and ferromagnetic material on the surface of the convex portion is excited. Then, magnetization pattern corresponding to the convex and concave portions is recorded on the magnetic recording medium.

According to this method, the surface of convex portions on the master carrier for magnetic transfer is brought into close contact with a magnetic recording medium to be preformatted (i.e. a slave medium). Then, the ferromagnetic material of the convex portion is excited at the same time, and a predetermined format is formed on the slave medium. Static recording can be achieved without changing relative positions of the master carrier for magnetic transfer and the slave medium, and accurate preformat recording can be achieved. Moreover, the time required for the recording is also very short. That is, in the method for recording from the magnetic head as described above, the time of several minutes to several tens of minutes is usually required. The time required for the recording is increased further in proportion to the amount of the recording information. In the new magnetic transfer method, transfer operation can be completed within 1 second regardless of the amount of the recording information or the recording density.

It is an object of the present invention to provide a master carrier for magnetic transfer, by which it is possible to overcome the problems such as poor quality of the transferred pattern or inaccurate servo operation on the slave medium prepared by the transfer of the preformat pattern by applying external magnetic field on the master carrier and the slave medium in close contact with each other.

### SUMMARY OF THE INVENTION

The present invention provides a master carrier for magnetic transfer used in a transfer method for applying a magnetic field for transfer by bringing a master carrier for magnetic transfer into close contact with a slave medium, said master carrier having a magnetic layer corresponding to a recording information for transfer formed on surface of a substrate, said slave medium serving as a magnetic recording medium where the information is to be transferred, whereby relative permeability of the magnetic layer of the master carrier for magnetic transfer is within the range of 10 - 1000.

### BRIEF DESCRIPTION OF THE DRAWINGS

Fig. 1 is a drawing to explain a transfer method from a master carrier for magnetic transfer to a slave medium according to the present invention; and
Fig. 2 shows drawings to explain an example of a method for manufacturing the master carrier for magnetic transfer of the present invention shown in the order of processes.

### DESCRIPTION OF THE PREFERRED EMBODIMENT

The present inventors have found that quality of a magnetic signal transferred is influenced by relative magnetic permeability of a magnetic layer on a master carrier for magnetic transfer and have conceived the present invention.

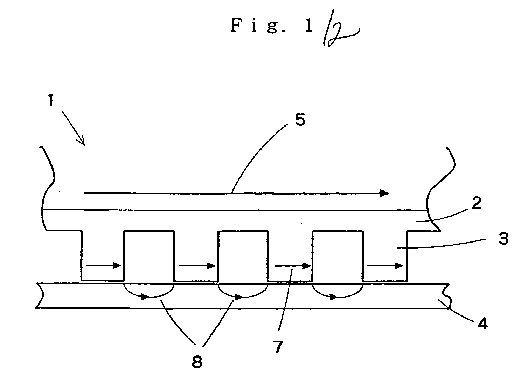

Fig. 1 is a drawing to explain a method to transfer an information from a master carrier for magnetic transfer to a slave medium according to the present invention.

An exciting magnetic field 5 is provided from a convex portion 3 (formed to match a preformat on the surface of a ferromagnetic film 2) on a master carrier 1 for magnetic transfer to the surface of a slave medium 4 which is in close contact with the master carrier. Then, the convex portion 3 is magnetized in that direction. On the slave medium 4, a recording magnetic field 8 is formed in response to magnetization 7 of the convex portion 3 on the master carrier for magnetic transfer, and preformatting of the slave medium is performed. When it was attempted to study the case where poor transfer to the slave medium occurs in this magnetic transfer method, it has been found that poor transfer was caused when relative magnetic permeability of the magnetic layer of the master carrier was high.

This may be attributed to the fact that, when the magnetic field is removed after application of the magnetic field for transfer and the master carrier for magnetic transfer is separated from the slave medium, the master carrier for magnetic transfer is partially magnetized by the magnetic field from the pattern of the slave medium because relative magnetic permeability is high, and this causes magnetization of the slave medium.

To prevent this phenomenon, relative magnetic permeability of the magnetic layer of the master carrier must be 1000 or less. In case the relative permeability is 1000 or less, magnetization does not occur on the magnetic layer or magnetization occurs in the same direction as the magnetic field for transfer.

When relative permeability is too low, the magnetic field for transfer is not absorbed in the master carrier. Because the same magnetic field is present at each portion on the slave medium at the time of transfer, it is not possible to achieve magnetic transfer corresponding to the pattern of the master carrier.

Therefore, relative permeability of the magnetic layer of the master carrier is preferably 10 - 1000, or more preferably 50 - 500.

Next, description will be given on a method for manufacturing the master carrier for magnetic transfer according to the present invention referring to the drawings.

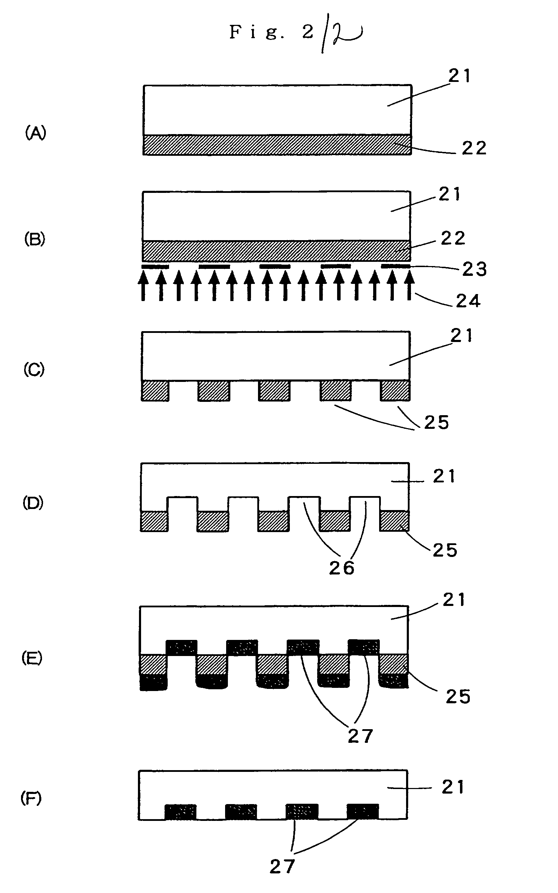

Fig. 2 shows drawings to explain an example of a method for manufacturing the master carrier for magnetic transfer of the present invention shown in the order of processes.

As shown in Fig. 2 (A), on a substrate 21 with flat and smooth surface, a photoresist 22 is coated. As the substrate 21, a planar member, which has flat and smooth surface and is made of silicon, quarts plate, glass, non-magnetic metal such as aluminum, or alloy, ceramics, synthetic resin, etc. may be used. The substrate also has enough resistance to processing environment conditions such as temperature in the processes of etching and film formation.

Any type of photoresist to match the process such as etching may be used.

As shown in Fig. 2 (B), light exposure 24 is performed using a photomask 23 corresponding to the pattern of the preformat.

Next, as shown in Fig. 2 (C), development is performed, and a pattern 25 corresponding to the information of the preformat is formed on the photoresist 22.

Next, in the etching process, etching of the substrate is performed to correspond to the pattern by etching means such as reactive etching, physical etching using argon plasma, or etching using liquid as shown in Fig. 2 (D).

The depth of the hole to be formed by the etching should be a depth corresponding to thickness of a magnetic layer formed as a transfer information recording portion. It is preferably 20 - 1000 nm. If it is too thick, spreading width of the magnetic field becomes too large, and this is not desirable.

The holes to be formed have preferably uniform depth so that bottom surface can be formed to have a surface plane running in parallel to the surface of the substrate.

Also, the hole has preferably such a shape that its cross-section in the track direction perpendicular to the surface is of rectangular shape.

Next, the magnetic material is processed as shown in Fig. 2 (E) by vacuum film forming means such as vacuum deposition method, sputtering method, or ion plating method. Then, a film of magnetic material 27 is formed up to the surface of the substrate in such thickness as to correspond to the formed hole. Magnetic characteristics of the transfer information recording portion are as follows: coercive force (Hc) not more than 198.9 kA/m (2500 Oe), or more preferably, 0.397 - 119.4 kA/m (5 - 1500 Oe); saturation magnetic flux density (Bs) not less than 0.3 T (3000 Gauss), or more preferably, not less than 0.5 T (5000 Gauss).

Then, the photoresist is removed by lift-off method as shown in Fig. 2 (F). The surface is polished, and burrs are removed if any, and the surface is flattened.

In the above, description has been given on the method to form holes on the substrate and to form a film of magnetic material in the holes thus formed. It may be designed in such manner that the film of magnetic material is formed at predetermined points on the substrate to make convex portions on the transfer information recording portion, and non-magnetic material is formed in film or is filled between the convex portions, and the surface of the transfer information recording portion may be made on the same level as that of the non-magnetic material portion.

In the present invention, a magnetic material to be used in the transfer information recording portion has relative permeability of 10 - 1000. As the magnetic material to be used in the magnetic layer, cobalt, iron or their alloys may be used. More concretely, CoPtCr, CoCr, CoPtCrTa, CoPtCrNbTa, CoCrB, CoNi, Fe, FeCo, FePt, FeNi, FeNiMo, CoNb, CoNbZr, FeSiAl, FeTaN, etc. may be used.

In particular, it is preferable to use FeCo (70:30), FeNi, FeNiMo (75:20:5), CoNb, CoNbZr, FeSiAl, or FeTaN.

In order to provide magnetic anisotropy on the magnetic material, it is preferable to have a non-magnetic primer layer, and crystal structure and lattice constant should be the same as those of the magnetic layer. More concretely, Cr, CrTi, CoCr, CrTa, CrMo, NiAl, Ru, etc. may be used to form the film by sputtering.

In the master carrier for magnetic transfer and the slave medium of the present invention, it is preferable that a diamond-like carbon protective film is formed on the transfer information recording portion to provide sufficient hardness so that the transfer information recording portion 10 may not be damaged, and it has hardness of 10 GPa or more, or more preferably 20 GPa or more. If it is lower than 10 GPa, durability is decreased, and this is not desirable.

As the protective film to be formed on the surface of the magnetic layer of the master carrier for magnetic transfer, the diamond-like carbon protective film may be formed by plasma CVD method using a carbon-containing compound as raw material, i.e. alkane such as methane, ethane, propane, butane, etc., alkene such as ethylene, propylene, etc, or alkyne such as acetylene. In this case, it is desirable that negative voltage of 50 - 400 V is applied on a substrate.

The carbon protective film preferably has thickness of 3 - 30 nm, or more preferably 5 - 10 nm.

Further, it is preferable that a lubricant is present on the carbon protective film. As the lubricant, it is preferable to use an organic fluorine compound containing perfluoroalkyl group. The thickness of the lubricant is preferably 1 - 10 nm.

In particular, when the lubricant is provided, it is possible to prevent the decrease of durability caused by friction, which occurs when the master carrier for magnetic transfer and the slave medium come into close contact with each other.

When dust is attached on the surface of the master carrier for magnetic transfer, the surface of the master carrier or the magnetic recording medium may be damaged or a gap may occur between these two. It has been found that, by preventing the attachment of the dust, the recording information can be accurately transferred.

When a master carrier is used, which has the ferromagnetic layer only on convex portion, it is possible to transfer a magnetized pattern without causing disturbance to the slave medium. However, when transfer operation is repeatedly performed by a multiple of times, defect or lacking may occur on the transferred pattern.

Such problems often arise when dust is collected together from the surrounding due to electric charging caused by repeated contact of the master carrier for magnetic transfer with the slave medium.

Specifically, the master carrier for magnetic transfer is generally produced by photo-lithography, and a material suitable for etching and film formation under vacuum condition such as glass, quartz, silicon, etc. is used on a substrate of the master carrier for magnetic transfer.

These substances have low conductivity. The slave medium also has low conductivity because it is generally formed on a substrate made of synthetic resin. For this reason, when the master carrier for magnetic transfer is brought into close contact with the slave medium by a multiple of times, the master carrier is electrically charged. The dust in the atmospheric air may be attached electrostatically on the convex portion of the master carrier for magnetic transfer. As a result, spacing loss may occur between the master carrier and the slave medium, or defect may develop on the convex portion, or the slave medium may be damaged.

As a result, the magnetized patterns on corners of the convex portion may not be accurately transferred, or the transferred magnetization at the corners may be disturbed. Further, distance between the convex portion and the slave medium may be increased because of the attached solid substances, and the recording on the slave medium may be partially lost.

As the slave medium to be used in the present invention, it is preferable to use synthetic resin film as a base material. More concretely, polyethylene terephthalate, polyethylene naphthalate, aramide, polyimide, polyphenylene benzbisoxazale, etc. may be used.

As the magnetic layer to be formed on the slave medium, it is preferable to use a material made of ferromagnetic metal thin film because a magnetic recording medium having high recording density can be obtained. Or, the magnetic layer may be formed by coating a composition, which contains ferromagnetic metal powder dispersed in a binder. In this case, a material with a predetermined hardness can be obtained by adjusting type or quantity of abrasive material to be mixed with the composition used for the formation of the magnetic layer.

In case the slave medium is formed with the ferromagnetic metal thin film, it is preferable to form a diamond-like carbon protective film on the surface of the magnetic layer, and further, to form a lubricant layer on it.

When a magnetic recording information is transferred from the master carrier for magnetic transfer to the slave medium, it is preferable that the master carrier for magnetic transfer and the slave medium are brought into close contact with each other. To achieve close contact, it is preferable to apply pressure on a nonmagnetic material such as an aluminum plate with a rubber plate interposed between them. It is effective to use a method to place the master carrier and the slave medium one upon another and to suck the air between these two under reduced pressure.

The master carrier for magnetic transfer of the present invention can be used not only for the transfer of the magnetic recording information to a disk type magnetic recording medium such as hard disk, large capacity removable type magnetic recording medium, but it can also be used for the transfer of the magnetic recording information to a card type or a tape type magnetic recording medium.

In the present invention, description has been given on the magnetic transfer from the master carrier to the slave medium by taking an example on the preformat. The invention is not limited to the preformat but may be applied to the transfer of any type of magnetic recording information, and it is possible to accurately transfer a large amount of magnetic recording information within short time.

It does not matter which of the master carrier or the slave medium may be at upper or lower position at the time of transfer. As the method to bring these two into close contact with each other, a method to place the slave medium on the master carrier and to apply pressure on it, or a method to suck the air from a gap between these two may be adopted.

### (Embodiments)

In the following, description will be given on embodiments of the present invention.

### (Examples 1-1 to 1-5 and Comparative examples 1-1 to 1-3)

### (Preparation of the master carrier)

On a glass substrate, a magnetic layer with a composition as shown in Table 1 was formed in thickness of 180 nm by the sputtering method using an atmosphere comprising argon under the pressure shown in Table 1. Next, by photo-fabrication method, a line portion of 3 µm and a space portion were prepared in a row in circumferential direction. DC magnetization was performed in inward direction, and master carriers for magnetic transfer A - G having different relative permeability values were prepared.

### (Magnetic transfer method)

Each of the master carriers A - G for magnetic transfer as prepared above was placed on a slave medium (Fuji Photo Film Co., Ltd.; magnetic recording medium for ZIP 100). Initial DC magnetization was performed at 318.3 kA/m (4000 Oe) in circumferential direction. Then, an exciting magnetic field of 159.2 kA/m (2000 Oe) was applied in a direction opposite to the magnetizing direction of the slave medium, and the magnetic recording information was transferred from the master carrier for magnetic transfer to the slave medium. Maximum reproduction intensity and error ratio were measured by the evaluation methods given below. The results are summarized in Table 2.

### (Examples 2-1 to 2-5 and Comparative examples 2-1 to 2-3)

Magnetic transfer was performed by the same procedure as in Example 1-1 except that a slave medium (Fuji Photo Film Co., Ltd.; magnetic recording medium for ZIP 250) was used and an exciting magnetic field intensity for transfer was set to 222.8 kA/m (2800 Oe). Evaluation was made in the same manner. The results are shown in Table 3.

### (Evaluation methods)

### (1) Maximum reproduction intensity

Transfer signal on the slave medium was evaluated using an apparatus for measuring electromagnetic characteristics (Kyodo Electronics Co.; SS-60). As the head, an inductive head with head gap of 0.4 *µ*m and reproduction track width of 3.5 µm was used.

Frequency analysis was performed on the reading signal using a spectro-analyzer. Relative evaluation was performed on the specimen with relative permeability of 50 using a peak intensity of primary signal.

### (2) Error ratio

A signal having intensity of less than 70% to the above maximum reproduction intensity was defined as an error. Error ratio was defined as a ratio of errors to total signals.

**Table 1**

| Master carrier | Relative permeability | Material | Substrate temperature (°C) | Pressure (Pa) |
|---|---|---|---|---|
| A | 2 | CoCr (85:15) | 200 | 1.07 |
| B | 5 | CoCr (85:15) | 150 | 0.40 |
| C | 10 | CoCr (85:15) | 25 | 0.13 |
| D | 50 | FeCo (70:30) | 25 | 0.40 |
| E | 200 | FeCo (70:30) | 25 | 0.13 |
| F | 1000 | FeNiMo (75:20:5) | 25 | 0.40 |
| G | 1600 | FeNiMo (75:20:5) | 25 | 0.13 |

**Table 2**

| Master carrier | Relative permeability | Maximum reproduction intensity ratio | Error ratio (%) |
|---|---|---|---|
| A | 2 | 0.3 | 100 |
| B | 5 | 0.5 | 100 |
| C | 10 | 0.8 | 2 |
| D | 50 | 1 | 0 |
| E | 200 | 1 | 0 |
| F | 1000 | 1 | 0 |
| G | 1600 | 1 | 30 |

**Table 3**

| Master carrier | Relative permeability | Maximum reproduction intensity ratio | Error ratio (%) |
|---|---|---|---|
| A | 2 | 0.2 | 100 |
| B | 5 | 0.4 | 100 |
| C | 10 | 0.8 | 4 |
| D | 50 | 1 | 0 |
| E | 200 | 1 | 0 |
| F | 1000 | 1 | 0 |
| G | 1600 | 1 | 30 |

As described above, by the use of the master carrier for magnetic transfer according to the present invention, it is possible to perform the preformat recording of servo signal for tracking, address information signal, reproduction clock signal, etc. with high quality signal and in stable manner on a disk type medium such as hard disk, large-capacity removable disk medium, large-capacity flexible medium, etc. within short time and with high productivity.

## Claims

1. A master carrier (1) for magnetic transfer used in a transfer method for applying a magnetic field (5, 7) for transfer by bringing the master carrier for magnetic transfer into close contact with a slave medium (4), said master carrier having a magnetic layer (2) corresponding to a recording information (25) for transfer formed on surface of a substrate (21), said slave medium serving as a magnetic recording medium where the information is to be transferred, whereby relative permeability of the magnetic layer of the master carrier for magnetic transfer is within the range of 10 - 1000.

2. A master carrier for magnetic transfer according to claim 1, wherein relative permeability of the magnetic layer of the master carrier for magnetic transfer is within the range of 50 - 500.

## Patentansprüche

1. Master-Träger (1) zur magnetischen Übertragung, die in einem Übertragungsverfahren verwendet wird, zum Anlegen eines magnetischen Feldes (5, 7) zur Übertragung durch ein enges in Kontakt Bringen des Master-Trägers zur magnetischen Übertragung mit einem Slave-Medium (4), wobei der Master-Träger eine magnetische Schicht (2) aufweist, die einer Aufzeichnungsinformation (25) zur Übertragung entspricht, die an einer Oberfläche eines Substrats (21) gebildet ist, wobei das Slave-Medium als ein magnetisches Aufzeichnungsmedium dient, auf das die Information übertragen werden soll, wobei die relative Permeabilität der magnetischen Schicht des Master-Trägers zur magnetischen Übertragung innerhalb des Bereiches von 10-1000 liegt.

2. Master-Träger zur magnetischen Übertragung nach Anspruch 1, wobei die relative Permeabilität der magnetischen Schicht des Master-Trägers zur magnetischen Übertragung innerhalb des Bereiches von 50-500 liegt.

## Revendications

1. Support maître (1) pour un transfert magnétique utilisé dans un procédé de transfert pour appliquer un champ magnétique (5, 7) destiné au transfert en amenant le support maître pour le transfert magnétique en contact étroit avec un support esclave (4), ledit support maître ayant une couche magnétique (2) correspondant à une information (25) d'enregistrement pour le transfert formée sur la surface d'un substrat (21), ledit support esclave faisant office de support d'enregistrement magnétique où l'information doit être transférée, de sorte qu'une perméabilité relative de la couche magnétique du support maître pour le transfert magnétique se trouve dans la gamme de 10 - 1000.

2. Support maître pour un transfert magnétique selon la revendication 1, dans lequel la perméabilité relative de la couche magnétique du support maître pour le transfert magnétique se trouve dans la gamme de 50 - 500.
